# EUROPEAN PATENT SPECIFICATION

(11) **EP 2 319 729 B1**
(45) Date of publication and mention of the grant of the patent: **27.07.2016**
(21) Application number: 09174465.6
(22) Date of filing: 29.10.2009
(51) Int. Cl.: B60Q 1/04

(54) **COLLAPSIBLE FASTENER**
ZUSAMMENKLAPPBARER BEFESTIGER
ATTACHE DÉMONTABLE

(43) Date of publication of application: 11.05.2011
(73) Proprietor: Volvo Car Corporation, 405 31 Göteborg (SE)
(72) Inventor: Lindmark, Peter, 42243 Hisings Backa (SE); Björnrud, Christer, 44290 Kungälv (SE)
(74) Representative: Widahl, Jenny Marie

(56) References cited:
- EP-A1- 0 716 953
- EP-A1- 1 568 580
- EP-A1- 1 577 160
- WO-A1-2005/113288
- FR-A1- 2 901 202
- FR-A1- 2 911 824
- JP-A- 2 109 752
- US-A1- 2006 146 556

## Description

### TECHNICAL FIELD

The invention relates to a collapsible fastener for fastening of a lamp unit to a vehicle body.

### BACKGROUND OF THE INVENTION

Many vehicle details are manufactured by means of injection moulding, e.g. the rear side of a lamp unit. A complicated geometry makes the tooling complicated and thus expensive. Details with complicated geometry may also be difficult to mount when assembling the vehicle. The front end of a vehicle is rather crowded with equipment and there is sometimes only limited space for assembling equipment, which could make it difficult to assemble a detail with complicated geometry. There is therefore a desire to use geometries, which are less complicated.

It is known from document US 6,923,495 B2 to have a front body structure comprising head-lamp units which are positionally adjustable to the front fenders of a vehicle in order to adjust the relation between the head-lamp units and the front fenders. In the sixth embodiment of that document, a T-shaped bracket is used as a fastener. The T-shaped bracket is movable in a slit thereby allowing positional adjustment, which simplifies the assembly.

Unfortunately, vehicles are sometimes involved in collisions. They may collide with other vehicles, objects on or beside the road, cyclists, pedestrians etc. It is generally desirable to minimize personal injury as well as damage to vehicles and other objects on or beside the road. For collisions occurring at low speeds, there is a desire that no important features of the vehicle would be damaged, so that the vehicle could continue to operate in a safe way. It is for example desired, that the head-lamps would still work after such a collision.

Document EP 1 568 580 A1 discloses a fender having an indexing device with a plastic indexing part that is supported by a rib and projected from an internal side of the fender. The part cooperates with a part of a case and an indexing finger to position the fender with respect to a headlight. The part and the rib are placed, such that an end of the fender is positioned at a preset distance with respect to the headlight.

Document WO 2005/113288 A1 discloses an improved motor vehicle headlight. The inventive headlight comprises a casing which is intended to receive a first lighting means and which is closed by means of a first lens such as to form a lower compartment. The invention is characterised in that the headlight also includes an upper compartment comprising a second lens which is solidly connected to a reflector to which a second lighting means is mounted. According to the invention, the upper compartment can move between (i) a pre-impact position in which the upper compartment is connected to the casing by means of a fusible link and (ii) a post-impact position in which, following the deformation of the fusible link, the upper compartment moves in relation to the casing.

Document EP 0 716 953 A1 discloses a headlight unit assembly for a vehicle. The headlight unit has a shell and a front glass, with a mounting arm attached at one end to the shell. The mounting arm has its other end shaped so it can be attached to a bracket that attaches to the vehicle body work. The arm is bolted to the bracket. The mounting arm is plastically deformable, with preferential deformation zones along its length. To adjust the position of the lamp unit relative to the body work of the vehicle the arm is bent at the deformation zones. The deformation zones are grooves that are oblique to the direction of the arm.

Document JP 02 109752 A discloses an attachment structure for a lighting means of a vehicle. The attachment structure comprises a pressing spring having four tilted pressing pieces.

Document FR 2 911 824 A1 discloses an impact absorption unit for a headlight of a motor vehicle. The unit has connection elements provided to connect the case to a structural element of vehicle. The elements cooperate with the unit during a pedestrian impact by deformation, such that the elements ensure a profile for absorbing a selected energy. The attachment has a groove defining two regions of the attachment, where the regions are arranged for ensuring a deformation of the attachment. The groove separates the regions and forms a rotation axle of the region with respect to another region during the impact.

Document US 2006/146556 A1 discloses a motor vehicle headlight, which comprises a casing enclosing a light source and fixed on a chassis, as well as frangible means of linking the casing to the chassis, which are able to absorb in the course of their rupture at least part of the energy of an impact suffered by the headlight.

Document FR 2 901 202 A1 discloses a vehicle having a headlamp with a case having a curved and convex external surface accessible from outside the vehicle. The case is mounted on a structure of the vehicle to leave a space between a horizontal portion of a fixing surface and the structure. The case has a positioning bar that cooperates with the structure and which allows, when a force higher than a facture value is exerted on the external surface, the case to swing towards the structure and/or the case to translate, whereby, in the event of an impact, a weakened zone of a fastening means breaks and allows the case to move.

### SUMMARY OF THE INVENTION

The object of the present invention is to overcome or ameliorate at least one of the disadvantages of the prior art, or to provide a useful alternative.

It is desirable to provide a collapsible fastener for fastening of a lamp unit to a vehicle body which facilitates assembly of the vehicle.

It is further desirable to provide a collapsible fastener which is adapted to minimize vehicle damages and/or personal injuries, especially in case of low-speed collisions.

The object above may be achieved by the invention according to claim 1.

In a first aspect of the present invention, there is provided a collapsible fastener for fastening of a lamp unit to a vehicle body. The collapsible fastener has a first attachment portion adapted to be fastened to the lamp unit and a second attachment portion adapted to be fastened to the vehicle body. The collapsible fastener is breakable, when subjected to a load, in at least two preferred breaking modes, a first and a second, each of the at least two preferred breaking modes being defined by a controlled breaking direction and a load threshold level for breakage to occur in that breaking direction, such that the size and direction of the load determines which breaking mode will occur.

The breaking direction is defined by the direction, in which the two attachment portions move relative to each other after breakage.

The collapsible fastener may also break in other directions, but the load threshold levels for these other directions are higher than for the at least two preferred breaking modes. The load thresholds in these other directions may be at least twice as high or preferably five times as high as the load thresholds for the preferred breaking modes. However, if collision speed is high, the loads will consequently be high, and the fastener may break in any direction. For such high-speed collisions, the issue of maintaining a feature of the vehicle intact is however not of major importance, since the vehicle anyway will be damaged. Instead, what is intended with the invention is, that for low-speed collisions, the fastener shall break in accordance with one of the preferred breaking modes. By low speed is meant speeds below 20 km/h, preferably below 16 km/h and most preferably below 6 km/h.

According to the invention, the collapsible fastener has a predefined number of preferred breaking modes, e.g. two or three preferred breaking modes.

The term "break" comprises the cases where the fastener looses its structural configuration. The term includes cases in which the fastener deforms, bends, folds, fractures and/or breakes off. Similarly, the term "breakage" comprises deformation, bending, folding, fracturing and/or breaking off. By "breaking off" is meant that a part of the fastener is separated from the rest of the fastener.

The lamp unit could be a head-lamp unit or another lamp unit. The fastener may also be used for fastening of other front structure details such as a radiator grill, a radar unit, a sensor and/or a camera.

By using a fastener according to the invention, assembly of the vehicle, especially the attachment of the lamp unit, may be facilitated. The geometry of the lamp unit may be designed to make it easy to manufacture, e.g. to injection mould, and yet at the same time easy to assemble when producing the vehicle.

By having pre-designed preferred breaking modes, it is possible to control where the breakage will happen, since the breakage normally will occur at the weakest part of the fastener. Further, it is preferred that the fastener breaks instead of the lamp unit, or the fender it is attached to, since the fastener is easier and cheaper to replace. Further, at least at low collision speeds, the whole lamp unit may be displaced as a unit and in many cases, it will not be damaged. Only the fastener will be broken. It will therefore be easy and cheap to repair such damage by replacing the fastener, at the same time as a pedestrian, who possibly is hit by the vehicle and thrown onto the vehicle, is protected from getting injured by for example a broken lamp glass or any protruding hard details.

According to the invention, the breaking directions of the at least two preferred breaking modes are essentially perpendicular to each other. One of the preferred breaking modes corresponds ¶ to loads occurring at a low speed frontal collision, and the other preferred breaking mode corresponds to the load from a pedestrian being hit by the vehicle and thrown onto the bonnet.

The load threshold levels for each of the at least two preferred breaking modes may be essentially equal or they may be different from each other. The load threshold should suitably be adapted to the vehicle model. Typical levels are between 1 and 2 kN. For other directions are the load thresholds clearly higher, as explained above. They may for example be in the magnitude of 10 kN.

The collapsible fastener may comprise a weakening arranged between the attachment portions, and at least one of the first and second breaking modes involves deforming of the collapsible fastener along the weakening and/or breaking off the fastener along the weakening. The weakening is designed, so that it deliberately is weaker than the rest of the fastener, in order to that the fastener will deform and/or break along the weakening.

In an embodiment, the collapsible fastener may comprise separate parts.

In an embodiment, such separate parts are, in the normal condition of the fastener, rotationally locked in relation to each other by means of a breakable structure comprised in one or more of the parts. One part may for example have a protruding element adapted to fit into a corresponding recession of the other part. At least one of the first and second preferred breaking modes involves breaking this breakable structure, thereby allowing rotation of these parts in relation to each other.

In an embodiment, at least one of the attachment portions comprises an attachment element for attachment of the collapsible fastener to the lamp unit and/or vehicle body, with the attachment element being formed as an integral structure of the at least one of attachment portion. The attachment element can be in the form of a plug, pin, clip, bolt, snap-in element etc.

At least one of the attachment portions may be adapted to receive an attachment element, the attachment element being adapted for attachment of the collapsible fastener to the lamp unit and/or vehicle body. The attachment element can be a plug, pin, clip, bolt, snap-in element etc. Such an attachment element can be a physically separate part, still it may be seen as part of the fastener, especially if it is specifically designed to fit into a receiving attachment portion, for example one part may have a protruding element adapted to fit into a corresponding recession of the other part.

In an embodiment, at least one attachment portion further comprises an attachment element for attachment of the collapsible fastener to the lamp unit and/or vehicle body. The at least one attachment portion has a recession or hole adapted to receive the attachment element. The attachment element comprises a breakable structure and/or the recession or hole comprises a breakable structure. At least one of the breaking modes involves breaking the breakable structure to allow the attachment element to rotate in relation to the recession or hole. This preferred breaking mode will lead to internal rotation within the fastener. Thereby the lamp unit may be displaced inwards into the vehicle as one unit and without damage. The fastener would not be broken off, since the displacement is a result of the internal rotation only, the lamp unit will still be retained by the fastener but at a lower level, with lower being defined in relation to the adjacent fender.

In an embodiment, the first and second attachment portions of the collapsible fastener are arranged laterally displaced in relation to each other. This geometrical configuration may facilitate mounting the lamp unit as close as possible to the vehicle body, e.g. to a fender. The lateral extension of the fastener makes it possible to manufacture the lamp unit to be assembled with a more favourable geometry. By favourable is meant that the detail is easier to manufacture, e.g. by means of injection moulding, and/or easier to mount. For example, an attachment element may be located further away from the edge of the lamp unit as compared to using a fastener without lateral displacement.

In an embodiment, each of the attachment portions has an elongate shape extending in a longitudinal direction. The respective longitudinal directions may be parallel to each other. They may also be angled to each other, i.e. having a certain angle between their axes. The angle may be favorable in order to facilitate assembly and to make it possible to locate the lamp unit as close as possible to the fender. The angle may also be used to compensate for production tolerances.

At least one of the attachment portions may comprise a guiding structure for facilitating attachment. The guiding structure may facilitate attachment by indicating the correct position of the fastener in relation to an attachment element.

The guiding structure of an attachment portion may be adapted to engage with a corresponding guiding structure of the corresponding attachment element, i.e. the attachment element adapted to fit into the attachment portion. The guiding structure may further prevent the attachment element from rotating relative to the corresponding attachment portion. The guiding structure may be the same as the breakable structure mentioned above. They may also be two different structures.

In a second aspect, there is provided a kit comprising a collapsible fastener according to the present invention and at least one attachment element as described above. The attachment element can be a plug, pin, clip, bolt, snap-in element etc. It may be a physically separate part or being formed as an integral structure of the lamp unit. The kit may comprise one or two attachment elements.

In another aspect of the present invention, there is provided a vehicle front body structure comprising a lamp unit, a fender and a collapsible fastener according to the present invention, the lamp unit being attached to the fender by means of the collapsible fastener. In an embodiment the breaking direction of the first preferred breaking mode is essentially frontal in relation to the vehicle and the breaking direction of the second preferred breaking mode is essentially vertical in relation to the vehicle. The second preferred breaking mode could correspond to a pedestrian, cyclist or other object being hit by the vehicle and thrown onto the bonnet.

The collapsible fastener may be arranged such that the lamp unit is displaceable inwards into the vehicle, when breaking the collapsible fastener according to one of said preferred breaking modes. The whole lamp unit may be displaced as a unit without being damaged. Further, a pedestrian, who has been hit by the vehicle, may be protected from getting injured by for example a broken lamp glass or any protruding hard details.

Since the first and second attachment portions of the collapsible fastener are arranged laterally displaced in relation to each other, the attachment point of the collapsible fastener to the lamp unit may be horizontally displaced in relation to the attachment point to the vehicle body. This geometrical configuration may facilitate mounting the lamp unit as close as possible to the vehicle body, e.g. to a fender. The lateral extension of the fastener makes it possible to manufacture the lamp unit to be assembled with a more favourable geometry. By favourable is meant that the detail is easier to manufacture, e.g. by means of injection moulding, and/or easier to mount.

In a another aspect, there is provided a use of a collapsible fastener according to the present invention as an impact force absorber in a vehicle.

### BRIEF DESCRIPTION OF THE DRAWINGS

The present invention will hereinafter be further explained by means of non-limiting examples with reference to the appended figures wherein:
- Fig. 1: shows a schematic overview of a collapsible fastener according to the invention,
- Fig. 2A-C: show a collapsible fastener according to a first embodiment of the invention,
- Fig. 3A-C: show a collapsible fastener according to a second embodiment of the invention,
- Fig. 4A-B: show a collapsible fastener according to a third embodiment of the invention,
- Fig. 5: shows a collapsible fastener according to a fourth embodiment of the invention,
- Fig. 6: shows a collapsible fastener according to a fifth embodiment of the invention,
- Fig. 7: shows a collapsible fastener according to a sixth embodiment of the invention,
- Fig. 8: shows a collapsible fastener according to a seventh embodiment of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

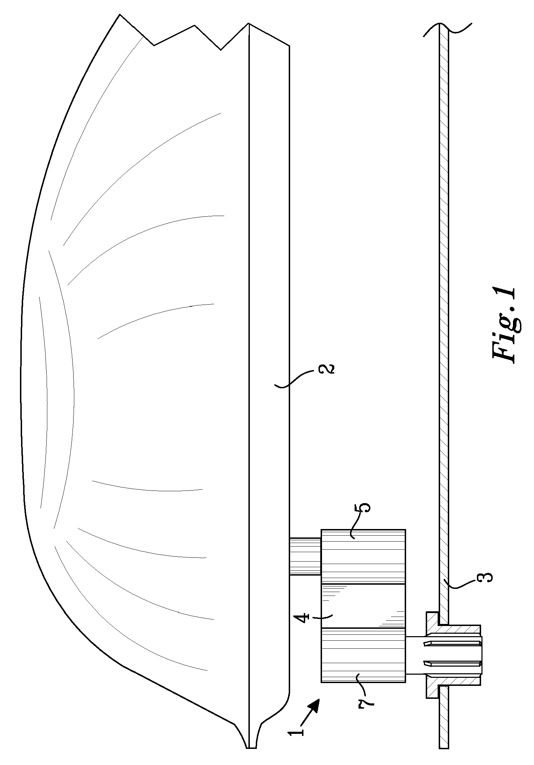

Figure 1 is a schematic overview of a collapsible fastener 1 according to the invention. The fastener 1 is intended for attachment of a lamp unit 2 to a vehicle body 3. The lamp unit 2 could be a head-lamp unit or another lamp unit. The fastener 1 comprises a weakening 4, a first attachment portion 5 and a second attachment portion 7. The first attachment portion 5 is adapted to be attached to the lamp unit 2 and the second attachment portion 7 is adapted to be attached to the vehicle body 3, e.g. to a fender.

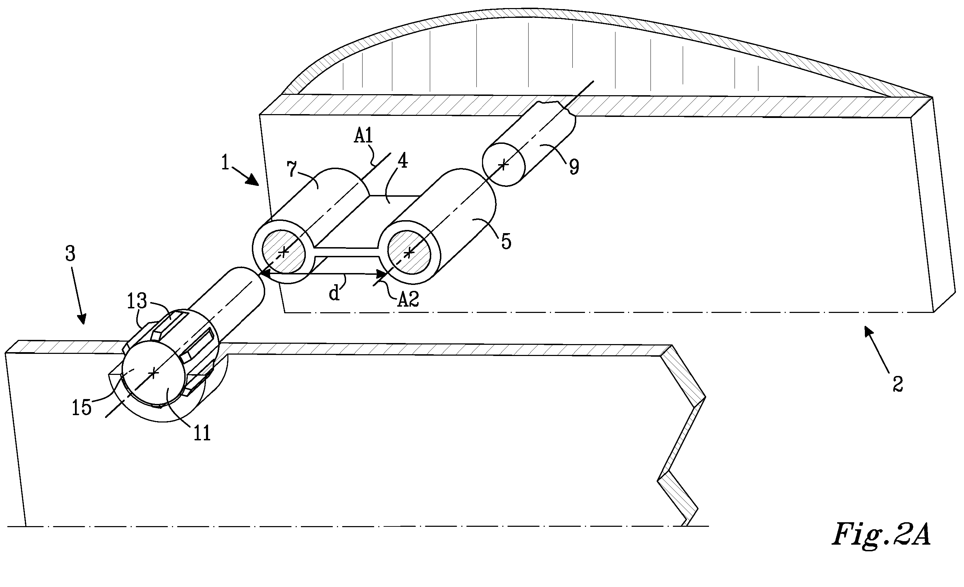

Figure 2A illustrates a collapsible fastener according to a first embodiment of the invention. The attachment portions 5, 7 are in the form of two rigid structures having a weak zone in between, the weakening 4. The terms rigid and weak are relative to each other, indicating that less force is needed to break the fastener in the weakening, than in a rigid structure. The fastener may also comprise more portions (not illustrated), for example a distance portion located between the first 5 and second 7 attachment portions so as to give a certain lateral distance between them. The distance portion would in that case preferably not be as weak as the weakening 4.

The attachment portions have an elongated shape extending in a longitudinal direction along an axis, A1 and A2 respectively. As can be seen, axes A1 and A2 are laterally displaced from each other, i.e. they are not located along the same straight line and the two axes do not coincide, giving the fastener a certain lateral extension d, defined as the distance between the two axes A1 and A2. This lateral extension may be used in order to facilitate mounting the lamp unit, as close as possible to the vehicle body, e.g. to a fender. The lateral extension of the fastener makes it possible to manufacture the lamp unit to be assembled with a more favourable geometry. By favourable is meant that the detail is easier to manufacture, e.g. by means of injection moulding, and/or easier to mount. As an example, the attachment point of the lamp unit may be located a certain distance, corresponding to the lateral extension d, from the edge of the lamp unit, thereby making it easier to injection mould the lamp unit. The above-mentioned (not illustrated) distance portion could be adapted to provide the desired lateral extension d between the attachment portions.

The fastener 1 of Figure 2A has two preferred breaking modes, a first and a second. To this end, weakening 4 is designed to have two preferred breaking directions. The term "preferred" means that the fastener 1 is designed so it will most easily break in any of the two preferred breaking modes. In this embodiment the breakage will occur in the weakening 4 for both breaking modes as described below. Each breaking mode is associated with a corresponding load threshold level. If the load is higher than the threshold level, breakage will occur.

If a low-speed collision would occur, wherein the force has a certain angle to the breaking directions of the first and second preferred mode, the fastener would in most cases anyway break according to one of the preferred modes. The breakage is governed by the design of the fastener.

The fastener may also break in other directions, but the load threshold levels for these other directions are higher than for the two preferred breaking modes. However, if collision speed is high, the loads will consequently be high, and the fastener may break in any direction.

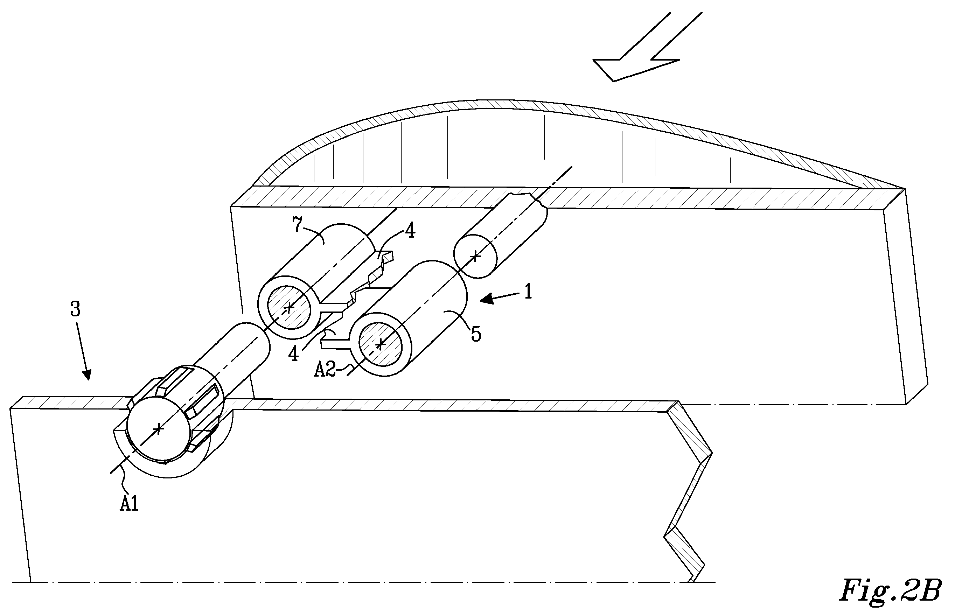

The breaking direction of the first preferred breaking mode is parallel to the illustrated axes A1 and A2. See Figure 2B. The breaking direction reflects the direction of the impacting force, seen as an arrow in Figure 2B. When the fastener is subjected to a force being parallel to the axes A1 or A2, the weakening 4 will break, provided the force is above the load threshold level, allowing the two attachment portions 5, 7 to move essentially along their respective axis. As an example, if the fastener 1 connects a head-lamp unit to a fender, this direction may correspond to the longitudinal direction of the vehicle. The load would then correspond to forces that may be caused at a frontal collision.

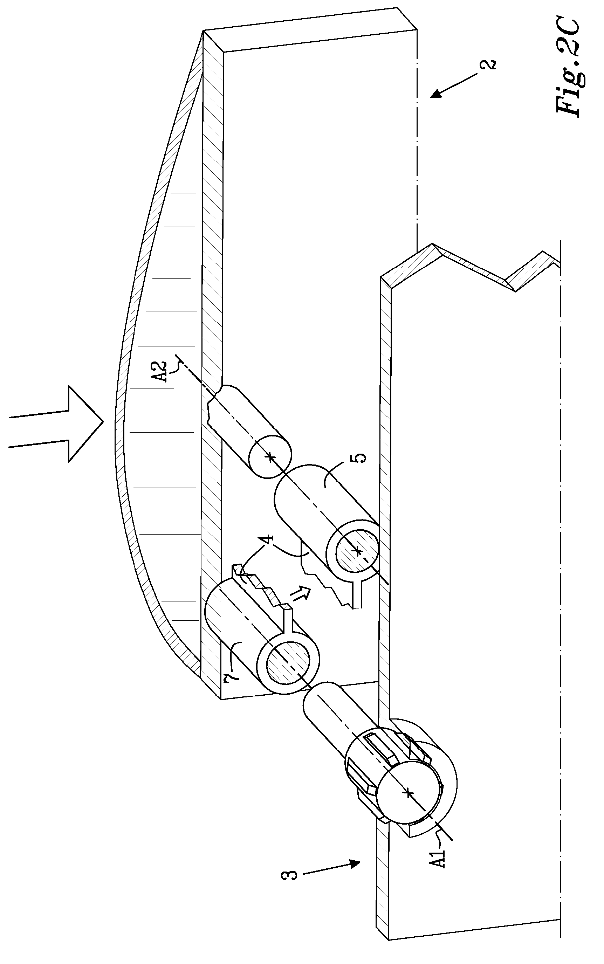

If instead the impact force is essentially perpendicular to the axes A1 and A2, as in Figure 2C, the two attachment portions 5, 7 will separate from each other in a direction perpendicular to the plane spanned by the axes A1 and A2, giving the breaking direction of the second preferred breaking mode. This may correspond to a case wherein a pedestrian or a cyclist is hit by the vehicle and thrown onto the bonnet of that vehicle, so that the load is coming from above. The attachment portions 5, 7 will in this case move vertically in relation to each other.

By having pre-designed breaking modes, it is possible to control where the breakage happens, since the breakage will occur at the weakest part, i.e. in the weakening 4. Further, it is preferred that the fastener 1 breaks instead of the lamp unit 2 or the fender, since the fastener 1 is easier and cheaper to replace. Since the lamp unit 2 is moved downwards, and thereby into the vehicle, after breakage of the collapsible fastener 1, there is also less risk that the pedestrian, or any other object hit by the vehicle, will be injured or damaged by the lamp unit 2. Further, at least at low collision speeds, the whole lamp unit 2 is displaced as a unit and in many cases, it will not be damaged. Only the fastener 1 would be broken. It would therefore be easy and cheap to repair such damage by replacing the fastener, at the same time as the pedestrian or cyclist is protected from getting injured by for example a broken lamp glass or any protruding hard details. The fastener then works as an impact force absorber in the vehicle.

The fastener may be designed, so that the forces needed for the two preferred breaking modes, i.e. the load threshold levels, are different from each other. The load threshold levels are preferably adapted to the vehicle model in which they are to be used, since geometries vary from one vehicle model to another. Typical load threshold levels are between 1 and 2 kN. Depending on the vehicle model, either the first or the second breaking modes may have the highest load threshold, or they may even be similar.

At least one of the attachment portions 5, 7 may be adapted to receive an attachment element 9, 11. The attachment element is for example a plug, pin, clip, bolt, snap-in element or similar. In Figure 2A a pin 9 is adapted to be inserted into the first attachment portion 5 of the fastener 1 in order to attach it to the lamp unit 2. The attachment element 9 may alternatively be an integral part of the lamp unit 2. If a part of the lamp unit 2, e.g. the part facing inwards in the vehicle, is injection moulded, the attachment element may be moulded at the same time in the same tool as an integral part of the lamp unit 2. Similarly, a pin 11 is adapted to be inserted in the body 3 of the vehicle, e.g. to a fender. The pin 11 has protruding structures 13 adapted to fit into the corresponding hole 15 in the vehicle body 3, e.g. a fender. Using protruding structures 13 facilitates trimming of the diameter of the integral pin 11 in order to fit the diameter of the hole 15.

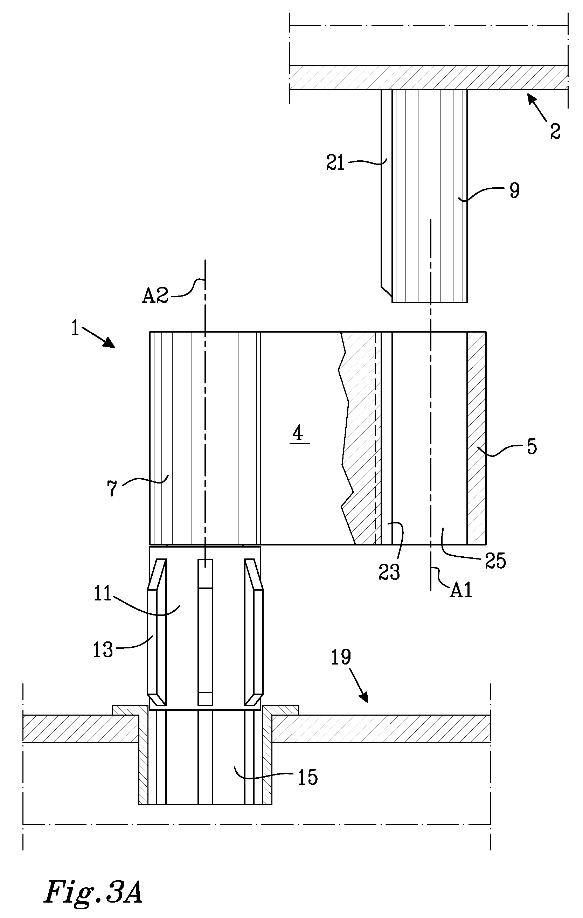

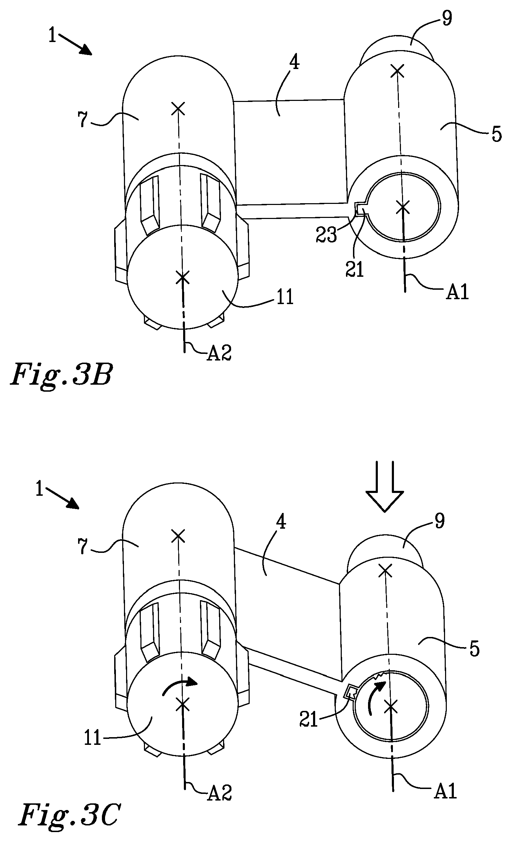

A second embodiment of the invention is illustrated in Figure 3A in top view and in Figure 3B in perspective view. Moreover, Figure 3A further illustrates a part of the lamp unit 2 and a part of fender 19 of the vehicle body. The lamp unit 2 is intended to be attached to the fender 19 by means of the fastener 1. The pin 9 has a guiding structure 21, here in the form of a fin, adapted to fit into a corresponding guiding structure 23 in a tubular hole 25 of the first attachment portion 5. The guiding structures 21, 23 facilitate attachment of the pin 9 to the fastener 1. It further prevents the two parts from rotating relative to each other. Since the pin 9 only has one fin 21, there will only be one correct orientation for the fastener 1 at assembly.

The attachment element may be formed as an integral part of the fastener 1, illustrated in Figure 3A as the second attachment portion 7 transforming into an integral pin 11.The integral pin 11 has protruding structures 13. The pin 11 is adapted to fit into the corresponding hole 15 in the fender 19. Using protruding structures 13 facilitates trimming of the diameter of the integral pin 11 in order to fit the diameter of the hole 15. The integral pin 11 may be adapted to be rotatable at its attachment location to the vehicle body 3. The combination in Figure 3A shows that one pin 9 is separate and one pin 11 is integral, but it is also possible that both attachment elements are integral or both are separate.

If the fastener 1 of Figure 3A is subjected to a force essentially along axes A1 and A2, the weakening 4 will break, i.e. the first preferred breaking mode. This is similar to what was illustrated in Figure 2B.

If the fastener is subjected to a force essentially perpendicular to the plane spanned by axes A1 and A2, i.e. from above in Figure 3A, the fin 21 will break, allowing free rotation of the pin 9 in relation to the first attachment portion 5, the second preferred breaking mode. The other pin 11 is free to rotate in the hole 15 around axis A2. The fastener 1 may therefore, after breakage of the fin 21, rotate around both the axes in a "double rotation" displacing the first attachment portion 5 to a position which is vertically lower than that of the second attachment portion 7, as illustrated in Figure 3C. Thereby the lamp unit 2 is allowed to move vertically downwards, i.e. inwards into the vehicle. The size of the vertical displacement depends on the size of the fastener 1 as well as how many degrees the fastener 1 is allowed to rotate relative to the axes A1 and A2. Purely as an example, a typical vertical displacement could be 1-30 mm, preferably 5-20 mm and most preferably 10-15 mm.

As an alternative to the second embodiment (not illustrated), a fin may be placed inside the tubular hole 25 projecting inwards, while the pin 9 in that case could have a corresponding recession, wherein the fin would fit.

The breakable structure, here the fin 21, may be used as a guiding structure as illustrated in the example. These two functions may also be separated from each other using two separate elements.

The guiding structure 21 may be biased, e.g. by a spring (not illustrated). When the attachment element 9 has the correct rotational position relative to the attachment portion 5, 7, the bias would make the guiding structure 21 engage with a corresponding recession in the other part. Consequently, the two parts would be locked from further rotation. If the guiding structure also is the breakable structure, as described for the Figure 3C, it would break, when subjected to a load overriding the load threshold, allowing the rotation described above.

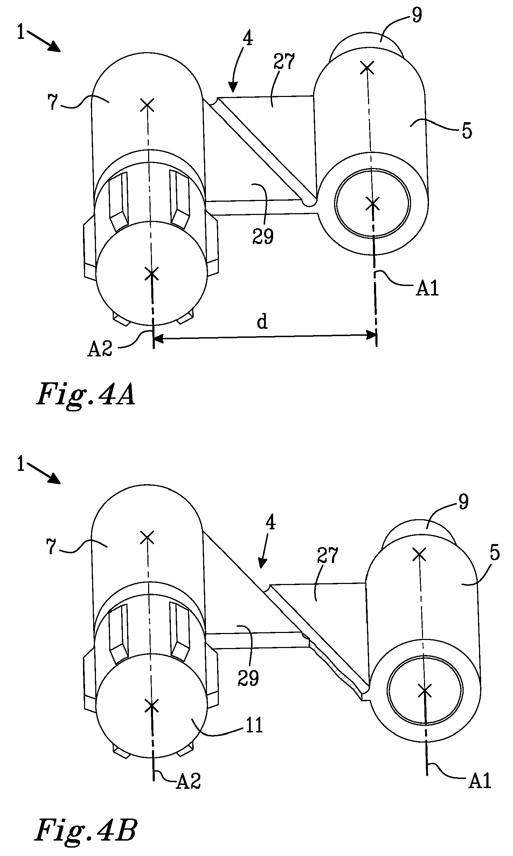

Figure 4A illustrates a third embodiment of the invention. The fastener 1 comprises a first 5 and a second 7 attachment portion. Located in between there are a first 27 and second 29 distal portion. The weakening 4 extends in an oblique angle to the axes A1 and A2. The distal portions 27, 29 provide a larger distal displacement d as compared to Figure 2.

If the fastener is subjected to a load essentially parallel to the axes A1 and A2, the weakening 4 will break. The weakening may be designed so that the distal portions in that case slide along each other as in Figure 4B. This would be the first preferred breaking mode. The second preferred breaking mode could be as described above for Figure 2C or Figure 3C.

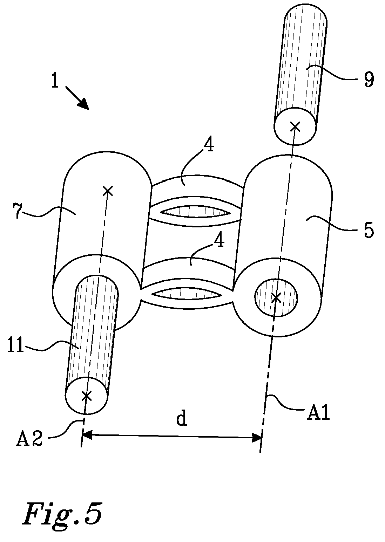

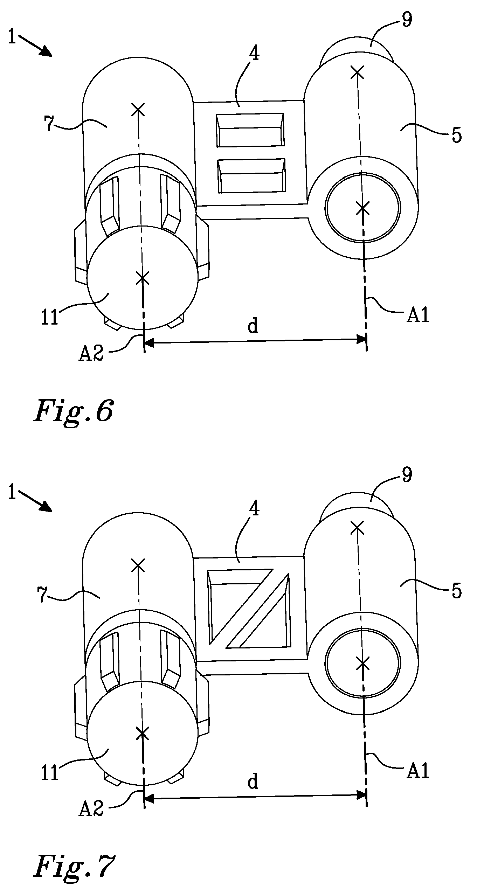

Figures 5, 6 and 7 illustrate a fourth, fifth and sixth embodiment of the invention having designs of the weakening 4, wherein the weakening 4 itself provides a lateral extension d.

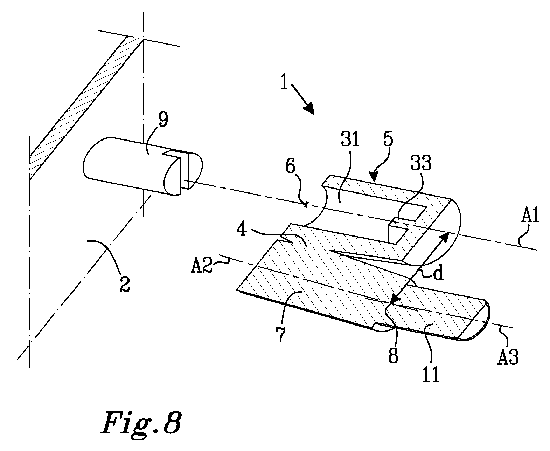

Figure 8 illustrates a collapsible fastener according to a seventh embodiment of the invention. In this case, the main axes A1 and A2 of the rigid structures 5 and 7 are non-parallel. Instead they are angled to each other. A typical angle would be 0-15 degrees, preferably 0-5 degrees. This may be favorable in order to facilitate assembly and to make it possible to locate the lamp unit 2 as close as possible to the fender. It may also be used to compensate for production tolerances. In Figure 8, the lateral extension d is defined as the perpendicular distance from the centre point of the attachment end 8 of the second attachment portion 7 to the axis A1 passing through the center point of the attachment end 6 of the first attachment portion 5. Moreover, the pin 11, which here is integral with the second attachment portion 7, extends along axis A3, which has a certain angle against axis A2 of the attachment portion 7. A typical angle would be 0-15 degrees, preferably 0-5 degrees. In the example axis A3 is parallel to A1, but they may also be angled in relation to each other, with this angle being the sum of the angle between axes A1 and A2 plus the angle between axes A2 and A3. By allowing an angle between the axes, the direction of the attachment element is decoupled from the direction of the fastener. A pin 9 is adapted to be attached to the lamp unit 2 or forms an integral structure thereof. At assembly, the pin 9 will be pushed into a tubular recession 31 of the first attachment portion 5. A protrusion 33 at the bottom of the tubular recession 31 makes sure that the fastener does not rotate around the pin 9.

In Figure 8, the first preferred breaking mode would correspond to breaking off or folding the weakening 4, similar to as described for Figure 2B. The second preferred breaking mode may correspond to breaking off or folding the weakening 4 in a direction essentially perpendicular to the breaking direction of the first preferred breaking mode, similar to as described for Figure 2C. However, as an alternative, the second preferred breaking mode could comprise breaking off the protrusion 33, thereby allowing rotation of the first attachment portion 5 of the fastener 1 around the pin 9 around axis A1. The integral pin 11 may be rotatable at its attachment to the vehicle body. Considering the case when the axes A1 and A3 are parallel to each other, the fastener 1 may rotate around both the axes in a "double rotation" displacing the first attachment portion 5 to a position which is vertically lower than that of the second attachment portion 7, thereby allowing the lamp unit to be pushed inwards into the vehicle, similar as explained for Figure 3C above.

Suitable material for the fastener 1 and the attachment elements 9, 11 is plastic or metal, e.g. moulded plastic. Purely as an example, the fastener may extend 10 to 150 mm along the axes A1 and A2, preferably 25 to 125 mm and most preferably 50 to 100 mm. The lateral extension d may be 5 to 150 mm, preferably 7 to 120 mm and most preferably 10 to 100 mm.

Further modifications of the invention within the scope of the appended claims are feasible. As such, the present invention should not be considered as limited by the embodiments and figures described herein. Rather, the full scope of the invention should be determined by the appended claims, with reference to the description and drawings. Especially, any attachment element from one of the embodiments may be combined freely with any one of the described preferred first and/ or second breaking modes. Further, the attachment portions 5, 7 may be arranged relative to each other in parallel or angled, with or without a lateral displacement, as long as the arrangement allows the fastener 1 to have at least two preferred breaking modes.

It would further be possible that a fastener comprises more than two attachment portions. Purely as an example, two attachment portions may be used for attachment at the side of the vehicle body and one attachment portion at the side of the lamp unit, or vice versa. A fastener may also have more than one weakening.

The fastener may also be used for fastening of other front structure details such as a radiator grill, a radar unit, a sensor and/or a camera.

## Claims

1. A collapsible fastener (1) for fastening of a lamp unit (2) to a vehicle body (3), said collapsible fastener (1) having a first attachment portion (5) adapted to be fastened to said lamp unit (2) and a second attachment portion (7) adapted to be fastened to said vehicle body (3),
said collapsible fastener (1) being breakable, when subjected to a load, in at least two preferred breaking modes, a first and a second preferred breaking mode, each of said at least two preferred breaking modes being defined by a controlled breaking direction and a load threshold level for breakage to occur in said breaking direction, such that the size and direction of said load determines which breaking mode will occur,
wherein the breaking directions of said at least two preferred breaking modes are essentially perpendicular to each other, one of the preferred breaking modes corresponding to loads occurring at a low speed frontal collision, and the other preferred breaking mode corresponding to the load from a pedestrian being hit by the vehicle and thrown onto the bonnet,
said breakage occurs by fracturing or breaking off of said fastener (1), **characterized by**
the first and second attachment portions (5, 7) of said collapsible fastener (1) being arranged laterally displaced in relation to each other,
each of the attachment portions (5, 7) having an elongate shape extending in a longitudinal direction, said longitudinal directions being parallel to each other or being angled to each other,
laterally relating to when said collapsible fastener (1) is mounted in said vehicle body (3).

2. The collapsible fastener (1) according to any one of the preceding claims, wherein said collapsible fastener (1) comprises a weakening (4) arranged between said attachment portions (5, 7), and at least one of said first and second breaking modes involves breaking off said collapsible fastener (1) along said weakening (4).

3. The collapsible fastener (1) according to any one of the preceding claims, wherein said collapsible fastener (1) comprises separate parts, which in the normal condition of the fastener (1) are rotationally locked in relation to each other by means of a breakable structure comprised in one or more of the parts and at least one of said first and second preferred breaking modes involving breaking this breakable structure, thereby allowing rotation of these parts in relation to each other.

4. The collapsible fastener (1) according to any one of the preceding claims, wherein at least one of said attachment portions (5, 7) comprises an attachment element (9, 11) for attachment of said collapsible fastener (1) to said lamp unit (2) and/or vehicle body (3), said attachment element (9, 11) being formed as an integral structure of said at least one attachment portion.

5. The collapsible fastener (1) according to any one of the preceding claims, wherein at least one of said attachment portions (5, 7) is adapted to receive an attachment element (9, 11), said attachment element (9, 11) being adapted for attachment of said collapsible fastener (1) to said lamp unit (2) and/or vehicle body (3).

6. The collapsible fastener (1) according to any one of the preceding claims, wherein at least one attachment portion (5) further comprises an attachment element (9) for attachment of said collapsible fastener (1) to said lamp unit (2) and/or vehicle body (3),
said at least one attachment portion (5) has a recession (31) or hole (25) adapted to receive said attachment element (9),
said attachment element (9) comprises a breakable structure (21) and/or said recession (31) or hole (25) comprises a breakable structure (33), and
at least one of said breaking modes involves breaking said breakable structure (21, 33) to allow said attachment element (9) to rotate in relation to said recession (31) or hole (25).

7. The collapsible fastener (1) according to any one of the preceding claims, wherein at least one of said attachment portions (5, 7) comprises a guiding structure (23) for facilitating attachment.

8. The collapsible fastener (1) according to claim 7 when also dependent on any one of claims 4-6, wherein said guiding structure (23) of the at least one attachment portion (5, 7) is adapted to engage with a corresponding guiding structure (21) of the corresponding attachment element.

9. A vehicle front body structure comprising a lamp unit (2), a fender (19) and a collapsible fastener (1) according to any one of claims 1-8, said lamp unit (2) being attached to said fender (19) by means of said collapsible fastener (1).

10. The vehicle front body structure according to claim 9, wherein the breaking direction of said first preferred breaking mode is essentially frontal in relation to said vehicle and the breaking direction of said second preferred breaking mode is essentially vertical in relation to said vehicle.

11. The vehicle front body structure according to claim 9 or 10, wherein said collapsible fastener (1) is arranged such that said lamp unit (2) is displaceable inwards into the vehicle, when breaking said collapsible fastener (1) according to one of said preferred breaking modes.

12. The vehicle front body structure according to any one of claims 9 to 11, when dependent on claim 1, wherein an attachment point of said collapsible fastener (1) to said lamp unit (2) is horizontally displaced in relation to an attachment point to said vehicle body.

## Patentansprüche

1. Zusammenklappbares Befestigungsmittel (1) zum Befestigen einer Lampeneinheit (2) an einer Fahrzeugkarosserie (3), wobei das zusammenklappbare Befestigungsmittel (1) einen ersten Befestigungsabschnitt (5), welcher dafür angepasst ist, an der Lampeneinheit (2) befestigt zu werden, und einen zweiten Befestigungsabschnitt (7) besitzt, welcher dafür angepasst ist, an der Fahrzeugkarosserie (3) befestigt zu werden,
wobei das zusammenklappbare Befestigungsmittel (1), wenn es einer Last unterworfen wird, auf mindestens zwei bevorzugte Bruchweisen, eine erste und eine zweite bevorzugte Bruchweise, brechen kann, wobei jede der mindestens zwei Bruchweisen durch eine kontrollierte Bruchrichtung und einen Lastschwellenpegel für in der Bruchrichtung auftretenden Bruch definiert ist, so dass die Größe und Richtung der Last bestimmen, welche Bruchart auftreten wird,
wobei die Bruchrichtungen der mindestens zwei bevorzugten Bruchweisen im Wesentlichen senkrecht zueinander sind, wobei eine der bevorzugten Bruchweisen Lasten entspricht, welche bei einem Frontalaufprall mit niedriger Geschwindigkeit auftreten, und die andere bevorzugte Bruchweise der Last von einem Fußgänger entspricht, welcher von dem Fahrzeug getroffen und auf die Motorhaube geworfen wird,
der Bruch durch Reißen oder Abbrechen des Befestigungsmittels (1) auftritt,
**dadurch gekennzeichnet, dass**
der erste und zweite Befestigungsabschnitt (5, 7) des zusammenklappbaren Befestigungsmittels (1) in Bezug zueinander seitlich versetzt angeordnet sind,
jeder Befestigungsabschnitt (5, 7) jeweils eine langgestreckte Form besitzt, welche sich in longitudinaler Richtung erstreckt, wobei die longitudinalen Richtungen zueinander parallel oder zueinander abgewinkelt sind,
und seitlich in Beziehung stehen, wenn das zusammenklappbare Befestigungsmittel (1) an der Fahrzeugkarosserie (3) befestigt ist.

2. Zusammenklappbares Befestigungsmittel (1) nach einem der vorhergehenden Ansprüche, wobei das zusammenklappbare Befestigungsmittel (1) eine zwischen den Befestigungsabschnitten (5, 7) angeordnete Schwächung (4) aufweist und mindestens eine von der ersten und zweiten Bruchweise ein Abbrechen des zusammenklappbaren Befestigungsmittels (1) entlang seiner Schwächung (4) mit sich bringt.

3. Zusammenklappbares Befestigungsmittel (1) nach einem der vorhergehenden Ansprüche, wobei das zusammenklappbare Befestigungsmittel (1) separate Teile aufweist, welche im normalen Zustand des Befestigungsmittels (1) in Drehrichtung in Bezug zueinander mittels einer zerbrechlichen Struktur, welche in einem oder mehreren der Teile enthalten ist, blockiert sind, und mindestens eine von der ersten und zweiten bevorzugten Bruchweise das Brechen dieser zerbrechlichen Struktur mit sich bringt, wodurch die Drehung dieser Teile in Bezug zueinander ermöglicht wird.

4. Zusammenklappbares Befestigungsmittel (1) nach einem der vorhergehenden Ansprüche, wobei mindestens einer der Befestigungsabschnitte (5, 7) ein Befestigungselement (9, 11) zur Befestigung des zusammenklappbaren Befestigungsmittels (1) an der Lampeneinheit (2) und/oder Fahrzeugkarosserie (3) aufweist, wobei das Befestigungselement (9, 11) als eine integrale Struktur des mindestens einen Befestigungsabschnitts ausgebildet ist.

5. Zusammenklappbares Befestigungsmittel (1) nach einem der vorhergehenden Ansprüche, wobei mindestens einer der Befestigungsabschnitte (5, 7) dafür angepasst ist, ein Befestigungselement (9, 11) aufzunehmen, wobei das Befestigungselement (9, 11) zur Befestigung des zusammenklappbaren Befestigungsmittels (1) an der Lampeneinheit (2) und/oder der Fahrzeugkarosserie (3) angepasst ist.

6. Zusammenklappbares Befestigungsmittel (1) nach einem der vorhergehenden Ansprüche, wobei mindestens ein Befestigungsabschnitt (5) weiter ein Befestigungselement (9) zur Befestigung des zusammenklappbaren Befestigungsmittels (1) an der Lampeneinheit (2) und/oder der Fahrzeugkarosserie (3) aufweist,
der mindestens eine Befestigungsabschnitt (5) eine Vertiefung (31) oder ein Loch (25) besitzt, welche dafür angepasst sind, das Befestigungselement (9) aufzunehmen,
das Befestigungselement (9) eine zerbrechliche Struktur (21) und/oder die Vertiefung (31) oder das Loch (25) eine zerbrechliche Struktur (33) aufweisen, und mindestens eine der Bruchweisen ein Brechen der zerbrechlichen Struktur (21, 33) mit sich bringt, um es dem Befestigungselement (9) zu ermöglichen, sich in Bezug auf die Vertiefung (31) oder das Loch (25) zu drehen.

7. Zusammenklappbares Befestigungsmittel (1) nach einem der vorhergehenden Ansprüche, wobei mindestens einer der Befestigungsabschnitte (5, 7) eine Führungsstruktur (23) zum Erleichtern der Befestigung aufweist.

8. Zusammenklappbares Befestigungsmittel (1) nach Anspruch 7, wenn er auch von einem der Ansprüche 4-6 abhängt, wobei die Führungsstruktur (23) des mindestens einen Befestigungsabschnitts (5, 7) dafür angepasst ist, mit einer entsprechenden Führungsstruktur (21) des entsprechenden Befestigungselements in Eingriff zu kommen.

9. Vorderwagenaufbau eines Fahrzeugs, aufweisend eine Lampeneinheit (2), einen Kotflügel (19) und ein zusammenklappbares Befestigungsmittel (1) nach einem der Ansprüche 1-8, wobei die Lampeneinheit (2) an dem Kotflügel (19) mittels des zusammenklappbaren Befestigungsmittels (1) befestigt ist.

10. Vorderwagenaufbau eines Fahrzeugs nach Anspruch 9, wobei die Bruchrichtung der ersten bevorzugten Bruchweise im Wesentlichen frontal in Bezug auf das Fahrzeug ist und die Bruchrichtung der zweiten bevorzugten Bruchweise im Wesentlichen senkrecht in Bezug auf das Fahrzeug ist.

11. Vorderwagenaufbau eines Fahrzeugs nach Anspruch 9 oder 10, wobei das zusammenklappbare Befestigungsmittel (1) so angeordnet ist, dass die Lampeneinheit (2) nach Innen in das Fahrzeug verschiebbar ist, wenn das zusammenklappbare Befestigungsmittel (1) gemäß einer der bevorzugten Bruchweisen bricht.

12. Vorderwagenaufbau eines Fahrzeugs nach einem der Ansprüche 9 bis 11, wenn sie von Anspruch 1 abhängig sind, wobei ein Befestigungspunkt des zusammenklappbaren Befestigungsmittels (1) an der Lampeneinheit (2) in Bezug auf einen Befestigungspunkt an der Fahrzeugkarosserie horizontal verschoben wird.

## Revendications

1. Dispositif de fixation compressible (1) servant à fixer une unité de feu (2) à une carrosserie de véhicule (3), ledit dispositif de fixation compressible (1) comportant une première partie d'assujettissement (5) conçue pour être fixée à ladite unité de feu (2) et une seconde partie d'assujettissement (7) conçue pour être fixée à ladite carrosserie de véhicule (3),
ledit dispositif de fixation compressible (1) pouvant être rompu, lorsqu'il est soumis à une charge, dans au moins deux modes de rupture préférés, un premier et un second mode de rupture préféré, chacun desdits au moins deux modes de rupture préférés étant défini par une direction de rupture contrôlée et un niveau seuil de charge auquel se produit la rupture dans ladite direction de rupture, de telle sorte que la taille et la direction de ladite charge détermine le mode de rupture,
les directions de rupture desdits au moins deux modes de rupture préférés étant essentiellement perpendiculaires l'une à l'autre, l'un des modes de rupture préférés correspondant à des charges agissant lors d'une collision frontale à faible vitesse, et l'autre mode de rupture préféré correspondant à la charge produite par un piéton percuté par le véhicule et projeté sur le capot, ladite rupture résultant d'une rupture partielle ou totale dudit dispositif de fixation (1), **caractérisé en ce que**
les première et seconde parties d'assujettissement (5, 7) dudit dispositif de fixation compressible (1) sont disposées de manière latéralement décalée l'une vis-à-vis de l'autre,
chacune des parties d'assujettissement (5, 7) présente une forme allongée s'étendant dans une direction longitudinale, lesdites directions longitudinales étant parallèles l'une à l'autre ou étant obliques l'une vis-à-vis de l'autre, latéralement s'appliquant à la situation dans laquelle ledit dispositif de fixation compressible (1) est monté dans ladite carrosserie de véhicule (3).

2. Dispositif de fixation compressible (1) selon l'une quelconque des revendications précédentes, ledit dispositif de fixation compressible (1) comprenant une section de moindre résistance (4) disposée entre lesdites parties d'assujettissement (5, 7), et au moins un desdits premier et second modes de rupture impliquant la rupture totale dudit dispositif de fixation compressible (1) le long de ladite section de moindre résistance (4).

3. Dispositif de fixation compressible (1) selon l'une quelconque des revendications précédentes, ledit dispositif de fixation compressible (1) comprenant des parties distinctes qui, dans l'état normal du dispositif de fixation (1), sont verrouillées en rotation les unes par rapport aux autres par l'intermédiaire d'une structure cassable faisant partie d'une ou de plusieurs des parties et au moins un desdits premier et second modes de rupture préférés impliquant la rupture de cette structure cassable, de façon à permettre ainsi la rotation de ces parties les unes par rapport aux autres.

4. Dispositif de fixation compressible (1) selon l'une quelconque des revendications précédentes, au moins une desdites parties d'assujettissement (5, 7) comprenant un élément d'assujettissement (9, 11) servant à l'assujettissement dudit dispositif de fixation compressible (1) à ladite unité de feu (2) et/ou à ladite carrosserie de véhicule (3), ledit élément d'assujettissement (9, 11) étant réalisé de façon à faire partie intégrante de ladite ou desdites parties d'assujettissement.

5. Dispositif de fixation compressible (1) selon l'une quelconque des revendications précédentes, au moins une desdites parties d'assujettissement (5, 7) étant conçue pour recevoir un élément d'assujettissement (9, 11), ledit élément d'assujettissement (9, 11) étant conçu pour l'assujettissement dudit dispositif de fixation compressible (1) à ladite unité de feu (2) et/ou à ladite carrosserie de véhicule (3).

6. Dispositif de fixation compressible (1) selon l'une quelconque des revendications précédentes, au moins une partie d'assujettissement (5) comprenant en outre un élément d'assujettissement (9) servant à l'assujettissement dudit dispositif de fixation compressible (1) à ladite unité de feu (2) et/ou à ladite carrosserie de véhicule (3), ladite ou lesdites parties d'assujettissement (5) comportant une cavité (31) ou un orifice (25) conçu pour recevoir ledit élément d'assujettissement (9),
ledit élément d'assujettissement (9) comprenant une structure cassable (21) et/ou ladite cavité (31) ou ledit orifice (25) comprenant une structure cassable (33), et
au moins un desdits modes de rupture impliquant la rupture de ladite structure cassable (21, 33) afin de permettre audit élément d'assujettissement (9) de tourner par rapport à ladite cavité (31) ou audit orifice (25).

7. Dispositif de fixation compressible (1) selon l'une quelconque des revendications précédentes, au moins une desdites parties d'assujettissement (5, 7) comprenant une structure de guidage (23) servant à faciliter l'assujettissement.

8. Dispositif de fixation compressible (1) selon la revendication 7 lorsqu'elle dépend également de l'une quelconque des revendications 4 à 6, ladite structure de guidage (23) de ladite ou desdites parties d'assujettissement (5, 7) étant conçue pour venir en prise avec une structure de guidage (21) correspondante de l'élément d'assujettissement correspondant.

9. Structure de carrosserie avant de véhicule comprenant une unité de feu (2), un pare-chocs (19) et un dispositif de fixation compressible (1) selon l'une quelconque des revendications 1 à 8, ladite unité de feu (2) étant assujettie audit pare-chocs (19) par l'intermédiaire dudit dispositif de fixation compressible (1).

10. Structure de carrosserie avant de véhicule selon la revendication 9, la direction de rupture dudit premier mode de rupture préféré étant essentiellement frontale par rapport audit véhicule et la direction de rupture dudit second mode de rupture préféré étant essentiellement verticale par rapport audit véhicule.

11. Structure de carrosserie avant de véhicule selon la revendication 9 ou 10, ledit dispositif de fixation compressible (1) étant disposé de telle sorte que ladite unité de feu (2) soit déplaçable vers l'intérieur dans le véhicule, lors d'une rupture dudit dispositif de fixation compressible (1) selon l'un desdits modes de rupture préférés.

12. Structure de carrosserie avant de véhicule selon l'une quelconque des revendications 9 à 11, lorsqu'elles dépendent de la revendication 1, un point d'assujettissement dudit dispositif de fixation compressible (1) à ladite unité de feu (2) étant décalé horizontalement par rapport à un point d'assujettissement à ladite carrosserie de véhicule.
